# EUROPÄISCHE PATENTSCHRIFT

(11) **EP 2 681 518 B1**
(45) Veröffentlichungstag und Bekanntmachung des Hinweises auf die Patenterteilung: **29.07.2015**
(21) Anmeldenummer: 12700941.3
(22) Anmeldetag: 05.01.2012
(51) Int. Cl.: G01F 23/24, G01F 23/26

(54) **SONDENEINHEIT**
PROBE UNIT
ENSEMBLE SONDE

(30) Priorität: 28.02.2011 DE 102011004807
(43) Veröffentlichungstag der Anmeldung: 08.01.2014
(73) Patentinhaber: Endress+Hauser GmbH+Co. KG, 79689 Maulburg (DE)
(72) Erfinder: SCHMIDT, Robert, 79650 Schopfheim (DE); KRUMBHOLZ, Andreas, 79689 Maulburg (DE)
(74) Vertreter: Andres, Angelika Maria
(86) Internationale Anmeldenummer: PCT/EP2012/050119
(87) Internationale Veröffentlichungsnummer: WO 2012/116851

(56) Entgegenhaltungen:
- DE-A1- 3 036 347
- DE-A1- 3 211 385
- US-A- 4 027 172
- US-A1- 2003 233 875
- US-B1- 6 945 120
- US-B1- 7 210 346

## Beschreibung

Die vorliegende Erfindung betrifft eine Sondeneinheit mit zumindest abschnittsweise koaxialem Aufbau. Insbesondere betrifft die Erfindung eine Sondeneinheit für eine Vorrichtung zur kapazitiven oder konduktiven Bestimmung mindestens einer Prozessgröße eines Mediums in einem Behälter. Bei der Prozessgröße handelt es sich beispielsweise um den Füllstand und/oder die elektrische Leitfähigkeit und/oder die Permittivität des Mediums.

Auf dem kapazitiven oder konduktiven Prinzip beruhende Messgeräte, weisen in der Regel eine im Wesentlichen zylindrische Sondeneinheit auf, welche in den Behälter einbringbar ist. Zur Füllstandsmessung sind einerseits vertikal in den Behälter hineinreichende stabförmige Sondeneinheiten zur kontinuierlichen Bestimmung des Füllstands und andererseits in die Wandung des Behälters einbringbare Sondeneinheiten zur Grenzstandmessung bekannt. Beide Varianten weisen zumindest eine Sondenelektrode auf. Insbesondere bei der Ausgestaltung der Sondeneinheit zur Grenzstanderfassung ist die Sondenelektrode vorzugsweise zumindest im Bereich des Prozessanschlusses koaxial von einer Guardelektrode umgeben, wobei die Guardelektrode und die Sondenelektrode durch eine elektrische Isolierung voneinander getrennt sind. Über die Kapazität zwischen Behälterwand und Sondenelektrode und/oder zwischen Medium und Sondenelektrode ist der Füllstand des Mediums in dem Behälter bestimmbar. Verfahren zur kapazitiven Füllstandsmessung sind beispielsweise in den Offenlegungsschriften DE 10157762 A1 und DE 10161069 A1 offenbart.

Aus dem Stand der Technik sind zur Kontaktierung von Elektroden einerseits Kabel mit Litzen bekannt, wobei die Litzen an die zu kontaktierenden Elemente angelötet werden und die Kabel in einen gemeinsamen Stecker münden. Andererseits kommen der jeweiligen Anwendung entsprechende flexible Leiterplatten zum Einsatz. Beispielsweise beschreibt die EP 1378014 B1 eine flexible Leiterplatte zur Kontaktierung von in einem Stapel angeordneten piezoelektrischen Elementen. Hierzu weist die Leiterplatte eine Vielzahl an Kontaktfahnen auf, welche durch Umbiegen zwischen die piezoelektrischen Elemente geklebt werden können. Diese Kontaktierungsmethode spart zwar Platz; das Anbringen der Kontaktfahnen erfordert jedoch einiges an Zeit und Geschicklichkeit.

DE 32 11 385 A1 beschreibt einen Niveauwächter für elektrisch leitende Flüssigkeiten. Der Niveauwächter weist ein Gehäuse auf, an dessen Bodenwand ein langgestreckter, gerader, starrer Fühler montiert ist, der an seinem freien Ende einen metallenen Kontaktkopf aufweist. Dieser Kontaktkopf ist mit einer Metallstange verbunden, die koaxial innerhalb eines starren und stabilen Isolierrohrs angeordnet ist. Die Stange ist durch eine metallisch leitende Durchführung, die an der Bodenwand verschraubt ist, und einen Durchbruch des Bodens hindurch in das Innere des Gehäuses geführt. Auf der Stange steckt eine Schaltungsplatine, die einen Kontaktring aufweist. Auf das freie Ende der Stange ist eine Mutter geschraubt.

US 6, 945, 120 B1 beschreibt einen Absolutdrucksensor, der eine Vielzahl von Druckmesschips aufweist. Die Druckmesschips sind auf einem Träger befestigt. Der Träger und die Druckmesschips sind auf einer flexiblen Leiterplatte befestigt.

Die Aufgabe der Erfindung besteht darin, eine einfache Kontaktierungsmöglichkeit für eine Sondeneinheit mit zumindest abschnittsweise koaxialem Aufbau anzugeben.

Die Aufgabe wird gelöst durch eine Sondeneinheit mit einem Sondengehäuse, einer zumindest abschnittsweise stabförmigen Sondenelektrode, einer Zusatzelektrode, welche die Sondenelektrode zumindest abschnittsweise koaxial umgibt und durch eine elektrische Isolierung von der Sondenelektrode getrennt ist, einem ersten Befestigungsmittel, mittels welchem die Zusatzelektrode in dem Sondengehäuse befestigt ist, einem Kontaktierungsmodul, welches auf einen in dem Sondengehäuse angeordneten stabförmigen Abschnitt der Sondenelektrode aufbringbar ist, und welches eine flexible Leiterplatte mit mindestens einer ersten Leiterbahn zur elektrischen Kontaktierung der Sondenelektrode und mindestens einer zweiten Leiterbahn zur elektrischen Kontaktierung der Zusatzelektrode aufweist, und mit einem zweiten Befestigungsmittel zur Befestigung des Kontaktierungsmoduls an der Sondenelektrode. Das Kontaktierungsmodul weist außer der Leiterplatte eine Isolierhülse und ein Modulgehäuse auf, wobei die Isolierhülse einen im Wesentlichen zylindrischen Grundkörper zur Aufnahme eines Abschnitts der stabförmigen

Sondenelektrode und ein im Wesentlichen orthogonal zu dem Grundkörper ausgerichtetes flächiges Auflageelement, welches den Grundkörper in einen ersten Abschnitt und einen zweiten Abschnitt unterteilt, aufweist, wobei die Leiterplatte in einem Endbereich über einen ersten Kontaktbereich, in welchen die erste Leiterbahn mündet, und einen zweiten Kontaktbereich, in welchen die zweite Leiterbahn mündet, verfügt, wobei der zweite Kontaktbereich durch Umfalten mit dem ersten Kontaktbereich in Deckung bringbar ist, wobei der erste Kontaktbereich und der zweite Kontaktbereich jeweils eine zentrale Ausnehmung aufweisen, deren Durchmesser mindestens gleich dem Außendurchmesser des Grundkörpers der Isolierhülse ist, sodass der erste Kontaktbereich auf den ersten Abschnitt des Grundkörpers und der zweite Kontaktbereich auf den zweiten Abschnitt des Grundkörpers aufbringbar ist, und wobei das Modulgehäuse den Aufbau aus Auflageelement und Kontaktbereichen der Leiterplatte zusammenhält.

Die Erfindung ist prinzipiell für alle Sondeneinheiten mit zwei zu kontaktierenden Elementen, welche zumindest abschnittsweise in einem koaxialen Aufbau angeordnet sind, geeignet. Insbesondere geeignet ist die Erfindung für Sondeneinheiten von Vorrichtungen zur kapazitiven oder konduktiven Bestimmung mindestens einer Prozessgröße eines Mediums in einem Behälter. Die im koaxialen Aufbau innen liegende Elektrode dient hierbei als Halterung für das Kontaktierungsmodul, wozu es zumindest auf einem Abschnitt, dessen Länge der Höhe des Kontaktierungsmoduls und eines Befestigungsmittels entspricht, nicht von der äußeren Elektrode umgeben ist.

Die Isolierung zwischen Sondenelektrode und Zusatzelektrode kann durch ein Element aus einem elektrisch isolierenden Material wie Kunststoff oder Glas realisiert sein, oder in Form eines Luftspalts vorliegen. Eine Kombination dieser beiden Varianten ist ebenfalls möglich. Das Sondengehäuse ist vorzugsweise metallisch und dient als Massepotential.

Das Auflageelement dient der Auflage der beiden Kontaktbereiche der Leiterplatte. Gleichzeitig stellt das Auflageelement die elektrische Trennung zwischen den beiden Kontaktbereichen sicher. Diese sind vorzugsweise ringförmig und über einen Steg miteinander verbunden, sodass die beiden Ausnehmungen durch Umklappen des zweiten Kontaktbereiches übereinander positionierbar sind. Die beiden Abschnitte, in welche das Auflageelement den Grundkörper der Isolierhülse unterteilt, können gleich oder verschieden lang sein. Um die Position der beiden Kontaktbereiche der flexiblen Leiterplatte zu fixieren, ist das Auflageelement in ein Modulgehäuse eingebracht. Das Modulgehäuse ist aus einem elektrisch isolierenden Material gefertigt, vorzugsweise aus einem Kunststoff.

In einer weiteren Ausgestaltung weist das Kontaktierungsmodul ein erstes Kontaktplättchen auf, welches derart ausgestaltet ist, dass es auf den ersten Abschnitt des Grundkörpers der Isolierhülse aufbringbar ist und die erste Leiterbahn in dem ersten Kontaktbereich elektrisch kontaktiert. Das erste Kontaktplättchen ist aus einem Metall oder einer Metalllegierung gefertigt und dient der Kontaktierung der Sondenelektrode. Entweder kontaktiert das erste Kontaktplättchen hierzu direkt die Sondenelektrode, oder es kontaktiert ein weiteres mit der Sondenelektrode verbundenes und elektrisch leitfähiges Element.

Bei einer weiteren Ausgestaltung weist das Kontaktierungsmodul ein zweites Kontaktplättchen auf, welches derart ausgestaltet ist, dass es auf den zweiten Abschnitt des Grundkörpers der Isolierhülse aufbringbar ist und die zweite Leiterbahn in dem zweiten Kontaktbereich elektrisch kontaktiert. Das zweite Kontaktplättchen ist aus einem Metall oder einer Metalllegierung gefertigt und dient der Kontaktierung der Zusatzelektrode. Das zweite Kontaktplättchen bewirkt einen sichereren Kontakt zwischen der Zusatzelektrode und der zweiten Leiterbahn und stellt zudem einen Schutz der flexiblen Leiterplatte vor Beschädigung beim Befestigen des Kontaktierungsmoduls dar. Das Kontaktplättchen ist in seiner Form so an die Leiterbahn anpassbar, dass die Kontaktfläche maximal ist. Zudem steht das Kontaktplättchen als Komponente des Kontaktierungsmoduls in festem Kontakt mit der zweiten Leiterbahn. Hierdurch ist die Herstellung eines dauerhaften leitfähigen Kontakts zwischen Zusatzelektrode und zweiter Leiterbahn vereinfacht.

Gemäß einer Weiterbildung der Erfindung verfügt das Kontaktierungsmodul über ein Verdrehschutzelement, welches in das Modulgehäuse einbringbar ist und eine Verwindung der Leiterplatte bei der Befestigung des zweiten Befestigungsmittels verhindert. Das Verdrehschutzelement ist vorzugsweise oberhalb des ersten Kontaktbereichs der Leiterplatte oder des ersten Kontaktplättchens angeordnet. Vorzugsweise ist das Verdrehschutzelement nicht auf die Isolierhülse aufgesteckt, sondern weist eine dem Durchmesser des stabförmigen Abschnitts der Sondenelektrode entsprechende Ausnehmung auf, sodass das Verdrehschutzelement nach dem Aufbringen des Kontaktierungsmoduls an der Sondenelektrode anliegt. In einer vorteilhaften Ausgestaltung ist das Verdrehschutzelement im Wesentlichen ringförmig. Um die Funktion eines Verdrehschutzes zu erfüllen weist das Verdrehschutzelement mindestens ein aus dem Modulgehäuse heraus ragendes Rastmittel auf, beispielsweise in Form zweier hakenartiger Ausbildungen, welche sich an dem Modulgehäuse abstützen und somit eine Drehbewegung des Verdrehschutzelements verhindern. In einer Ausgestaltung ist das Verdrehschutzelement so ausgestaltet, dass es gleichzeitig die Funktion des ersten Kontaktplättchens übernimmt und dieses somit ersetzt.

Bei einer weiteren Weiterbildung ist das Modulgehäuse derart ausgestaltet, dass die weiteren Elemente des Kontaktierungsmoduls in das Modulgehäuse einschnappbar oder einpressbar sind. Unter Einschnappen ist zu verstehen, dass die Elemente durch Druckausübung in das Modulgehäuse einbringbar sind, im Gegensatz zum Einbringen durch Einpressen jedoch in dem Modulgehäuse in radialer Richtung noch Spiel haben können. Das Modulgehäuse umgibt die eingebrachten Elemente schalenartig, jedoch nicht vollständig. Die Öffnung des Modulgehäuses ist so groß, dass die Elemente in das Modulgehäuse einbringbar sind, nach dem Einbringen aber nicht herausfallen können. Die einbringbaren weiteren Elemente des Kontaktierungsmoduls sind im einfachsten Fall die Isolierhülse und die Leiterplatte, wobei im Wesentlichen das Auflageelement mit den Kontaktbereichen in das Modulgehäuse eingebracht ist. Weitere fakultativ vorhandene Elemente des Kontaktierungsmoduls sind das erste Kontaktplättchen, das zweite Kontaktplättchen und das Verdrehschutzelement.

Gemäß einer Ausgestaltung der Erfindung ist die Sondenelektrode in einem in das Sondengehäuse hineinragenden Endbereich frei von der Zusatzelektrode, und das Kontaktierungsmodul ist derart auf die Sondenelektrode aufgebracht, dass der zweite Kontaktbereich oder das zweite Kontaktplättchen zumindest teilweise auf der Zusatzelektrode aufliegt. Das Kontaktierungsmodul liegt dann mit einer Unterseite an der äußeren Elektrode an, sodass die Kontaktierung mit dem Aufbringen des Kontaktierungsmoduls auf die Sondenelektrode hergestellt ist.

Eine Ausgestaltung der erfindungsgemäßen Sondeneinheit sieht vor, dass es sich bei dem ersten Befestigungsmittel um eine Mutter handelt, welche auf die Zusatzelektrode aufgebracht ist und/oder dass es sich bei dem zweiten Befestigungsmittel um eine Mutter handelt, welche auf die Sondenelektrode aufgebracht ist.

Eine weitere Ausgestaltung sieht vor, dass zwischen dem Kontaktierungsmodul und dem zweiten Befestigungsmittel ein federndes Element oder eine mitverspannte federnde Schraubensicherung angeordnet ist. Das federnde Element ist beispielsweise eine Teller- oder Spiralfeder und stellt sicher, dass der von dem zweiten Befestigungsmittel auf das Kontaktierungsmodul ausgeübte Anpressdruck stets gewährleistet ist. Bei der mitverspannten federnden Schraubensicherung handelt es sich vorzugsweise um ein ring- oder scheibenförmiges Element zum Schutz des zweiten Befestigungsmittels vor unbeabsichtigtem Lösen, beispielsweise um ein Federring oder eine Zahnscheibe.

Gemäß einer weiteren Ausgestaltung weist das erste Befestigungsmittel mindestens eine Kavität auf und das Kontaktierungsmodul verfügt über mindestens ein Rastmittel, welches in die Kavität einbringbar ist. Vorzugsweise handelt es sich bei dem ersten Befestigungsmittel um eine Kreuzschlitzmutter. Die Schlitze stellen die Kavität dar. Das Modulgehäuse verfügt dann über vorzugsweise zwei Rastmittel, beispielsweise in Form von Nasen, sodass das Modulgehäuse in der Mutter zumindest lose fixierbar ist. Dies wirkt als Positionierhilfe beim Einsetzen des Moduls und als Verdrehschutz beim Befestigen des zweiten Befestigungsmittels, insbesondere falls das zweite Befestigungsmittel eine an der Sondenelektrode festzuziehende Mutter ist.

Eine Weiterbildung der erfindungsgemäßen Sondeneinheit sieht vor, dass an einem zweiten Endbereich der Leiterplatte ein Stecker zur Verbindung mit einer Elektronikeinheit befestigt ist. Die Elektronikeinheit ist beispielsweise in einem Elektronikaufsatz angeordnet, welcher mit dem Sondengehäuse verbunden wird. In einer hiermit verbundenen Weiterbildung ist ein Haltesockel vorgesehen, über welchen der Stecker in dem Sondengehäuse positionierbar ist.

Erfindungsgemäß wird die Kontaktierung der beiden Elektroden in Form eines Moduls realisiert. Das Kontaktierungsmodul ist als vormontierbares Einsatzteil ausgestaltet, sodass die Kontaktierung bei der Montage der Sondeneinheit nur wenige Schritte erfordert. Es ist lediglich das Kontaktierungsmodul auf die Sondenelektrode aufzustecken und das zweite Befestigungsmittel aufzubringen und zu befestigen. Gegebenenfalls ist noch ein Haltesockel zur Fixierung der flexiblen Leiterplatte und eines auf der Leiterplatte montierten Steckers zur Verbindung des Kontaktierungsmoduls mit einer Elektronikeinheit im Sondengehäuse anzubringen. Der elektrisch leitfähige Kontakt zwischen den Leiterbahnen auf der flexiblen Leiterplatte und den beiden Elektroden ist rein mechanisch durch den mittels des zweiten Befestigungsmittels aufgebrachten Anpressdruck hergestellt, d.h. ohne Klebung oder Lötung. Hierdurch entfällt das Risiko fehlerhafter Löt- oder Klebestellen und ein dauerhafter elektrischer Kontakt ist gewährleistet. Zudem ist kein umständliches Löten im Sondengehäuse erforderlich.

Das Modulgehäuse, sowie die gegebenenfalls vorhandenen Kontaktplättchen, sind vorzugsweise symmetrisch ausgestaltet, sodass bei der Montage des Kontaktierungsmoduls nicht auf deren Ausrichtung zu achten ist. Bevorzugt sind das erste und das zweite Kontaktplättchen zudem identisch aufgebaut, sodass kein Verwechseln der beiden Teile möglich ist. Dies vereinfacht und beschleunigt die Montage des Kontaktierungsmoduls.

Die Erfindung wird anhand der nachfolgenden Figuren näher erläutert. Gleiche Teile sind mit gleichen Bezugszeichen versehen.
- Fig. 1: zeigt den schematischen Aufbau einer Sondeneinheit in einer Schnittdarstellung;
- Fig. 2: zeigt eine vorteilhafte Ausgestaltung eines Kontaktierungsmoduls in einer Explosionsdarstellung;
- Fig. 3: zeigt eine weitere Schnittdarstellung einer Sondeneinheit mit einer alternativen Ausführungsform eines Kontaktierungsmoduls;
- Fig. 4: zeigt eine Draufsicht auf eine flexible Leiterplatte für ein Kontaktierungsmodul;
- Fig. 5: zeigt eine modifizierte Sondeneinheit.

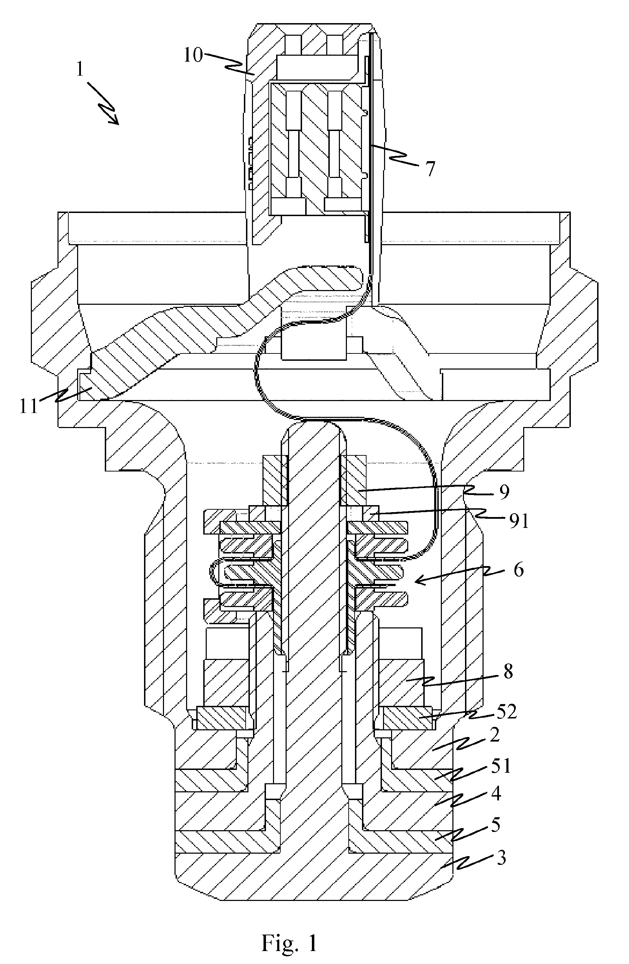

In Fig. 1 ist eine Sondeneinheit 1 mit montiertem Kontaktierungsmodul 6 schematisch dargestellt. Die Komponenten des Kontaktierungsmoduls 6 sind hierbei durch eine Doppelschraffur gekennzeichnet. Die Sondeneinheit 1 weist eine Sondenelektrode 3 auf, welche mit einem stabförmigen Abschnitt in das Sondengehäuse 2 hineinragt. Die Sondenelektrode 3 ist über eine Isolierung 5 von einer Zusatzelektrode 4 getrennt, welche die Sondenelektrode 3 koaxial umgibt. Die Zusatzelektrode 4 ist in Richtung Gehäuseinneres kürzer als die Sondenelektrode 3, sodass die Sondenelektrode 3 im Sondengehäuse 2 über die Zusatzelektrode 4 hinausragt. Derartige Sondeneinheiten 1 kommen insbesondere in kapazitiven Füllstandsmessgeräten zum Einsatz. Die Sondenelektrode 3 dient in der Regel der eigentlichen Messung, während die Zusatzelektrode 4 als Guard fungiert. Mit anderen Worten liegt die Zusatzelektrode 4 auf dem gleichen Potential wie die Sondenelektrode 3 und verbessert hierdurch die Ansatzverträglichkeit bei der Messung in Ansatz bildenden Medien.

Die Sondeneinheit 1 kann über das Sondengehäuse 2 in den Behälter mit dem Medium eingebracht werden. Hierzu weist das Sondengehäuse 2 beispielsweise ein Gewinde auf, über welches es mittels einer passenden Muffe in die Wandung des Behälters einschraubbar ist. Das Sondengehäuse 2 kann neben einem Schutz der von ihm beherbergten Elemente vor Umwelteinflüssen wie Feuchteablagerung auch als Masseelektrode dienen.

Das Sondengehäuse 2 ist abschnittsweise rohrförmig und weist eine Verjüngung auf, welche der Befestigung der Elektroden 3, 4 dient. Sondenelektrode 3, Isolierung 5, Zusatzelektrode 4, Verjüngung und eine Isolierungseinheit 51 zur elektrischen Trennung zwischen Zusatzelektrode 4 und Verjüngung bzw. Sondengehäuse 2, bilden einen axialen Aufbau, wobei die Längsachse des Sondengehäuses 2 die Achse bildet. Im Sondengehäuse 2 befindet sich ein erstes Befestigungsmittel in Form einer Mutter 8, welche auf den rohrförmigen, in das Sondengehäuse 2 hineinragenden Abschnitt der Zusatzelektrode 4 aufgebracht ist und den auf der anderen Seite der Verjüngung liegenden Abschnitt der Zusatzelektrode 4 somit gegen die Verjüngung zieht. Eine Isolierungseinheit 52 isoliert die mit der Zusatzelektrode 4 in elektrisch leitfähigem Kontakt stehende erste Mutter 8 von dem Sondengehäuse 2. Ein zweites Befestigungsmittel in Form einer zweiten Mutter 9, ist auf den stabförmigen in dem Sondengehäuse 2 angeordneten Abschnitt der Sondenelektrode 3 aufgebracht und mittels eines Gewindeeingriffs festziehbar. Da die Sondenelektrode 3 außerhalb des Sondengehäuses 2 das äußerste Element des axialen Aufbaus bildet, bewirkt das Befestigen der zweiten Mutter 9 eine zum Gehäuseinneren hin gerichtete Anziehkraft auf die Elemente des axialen Aufbaus und somit eine feste Verbindung der einzelnen Elemente.

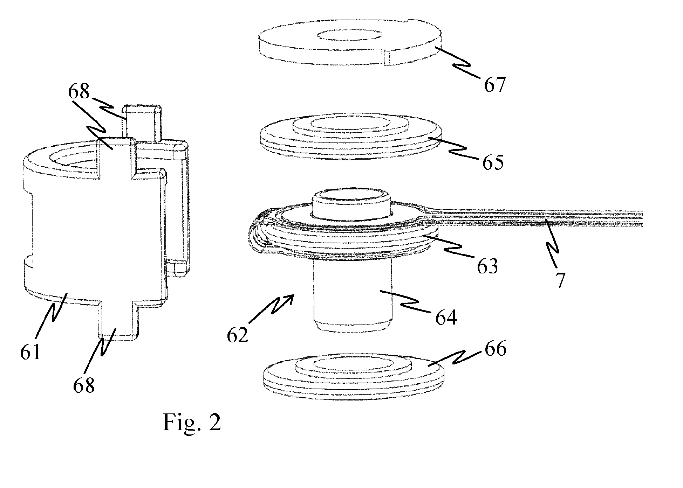

Die zweite Mutter 9 liegt in axialer Richtung nicht nur über ein Isolierelement auf der Zusatzelektrode 4 auf, wie es bei einer Kontaktierung der Elektroden 3, 4 über angelötete Kabel der Fall wäre. Stattdessen ist zwischen der Zusatzelektrode 4 und der zweiten Mutter 9 das Kontaktierungsmodul 6 angeordnet. Die zweite Mutter 9 drückt das Kontaktierungsmodul 6 gegen die Zusatzelektrode 4. Die einzelnen Elemente einer vorteilhaften Ausgestaltung des Kontaktierungsmoduls 6 sind im Zusammenhang mit Fig. 2 beschrieben. Zwischen dem Kontaktierungsmodul 6 und der zweiten Mutter 9 befindet sich vorzugsweise eine Zahnscheibe 91. An Stelle der Zahnscheibe 91 kann auch ein anderes mitverspanntes federndes Element, oder ein Federelement, beispielsweise eine oder mehrere Tellerfedern oder eine Spiralfeder, auf die Sondenelektrode 3 aufgebracht sein. Hierdurch werden thermische Ausdehnungseffekte in axialer Richtung kompensiert, wodurch eine dauerhafte Anzugskraft der zweiten Mutter 9 und somit ein dauerhafter Kontakt der über das Kontaktierungsmodul 6 hergestellten elektrischen Verbindungen gewährleistet ist. Der stets vorhandene Anpressdruck verhindert eine Verschiebung der relativen Position von Kontaktbereich 71, 74 und kontaktierendem Element, beispielsweise einem Kontaktplättchen 65, 66.

Über den zylindrischen Grundkörper 64 der Isolierhülse 62 ist das Kontaktierungsmodul 6 in einfacher Weise auf die Sondenelektrode 3 aufsteckbar. Die Isolierhülse 62 bewirkt weiterhin eine genaue Zentrierung des stabförmigen Abschnitts der Sondenelektrode 3 in dem rohrförmigen Abschnitt der Zusatzelektrode 4 und verhindert eine Beschädigung der flexiblen Leiterplatte 7 an dem in den stabförmigen Abschnitt der Sondenelektrode 3 eingebrachten Gewinde. Zudem stellt die Isolierhülse 62 die elektrische Trennung zwischen Zusatzelektrode 4 und Sondenelektrode 3 sicher.

Durch die Rastnasen 68 des Modulgehäuses 61 ergibt sich beim Aufstecken des Kontaktierungsmoduls 6 eine bessere Positionierbarkeit und zudem ein besserer Halt des Kontaktierungsmoduls 6 beim Festziehen der zweiten Mutter 9. Wegen des auftretenden Drehmoments bestünde ohne die Rastnasen 68 die Gefahr, dass sich das Modulgehäuse 61 mitdrehen und die flexible Leiterplatte 7 verwinden könnte. Die Rastnasen 68, welche in dafür vorgesehenen Schlitze oder Ausnehmungen in dem ersten Befestigungsmittel 8 eingreifen, bewirken einen Widerstand gegen die Drehbewegung, sodass das Modulgehäuse 61 fixiert ist und die zweite Mutter 9 ausreichend fest anziehbar ist. Bei der ersten Mutter 8 handelt es sich vorzugsweise um eine Kreuzschlitzmutter, wobei die Rastnasen 68 des Modulgehäuses 61 so ausgestaltet sind, dass sie in die Schlitze der Kreuzschlitzmutter eingreifen. Vorzugsweise besteht zwischen Modulgehäuse 61 und Mutter 8 ein Zwischenraum. Auch die Rastnasen 68 haben Spiel in den Kavitäten der Mutter 8.

Das Verdrehschutzelement 67, die Zahnscheibe 91 und die zweite Mutter 9 stehen in festem Kontakt miteinander und bestehen aus einem elektrisch leitfähigen Material. Der elektrische Kontakt zwischen der Sondenelektrode 3 und der ersten Leiterbahn 72 auf der flexiblen Leiterplatte 7 ist somit über das erste Kontaktplättchen 65, das Verdrehschutzelement 67, die Zahnscheibe 91, und vor allem die zweite Mutter 9 hergestellt. Der elektrische Kontakt zwischen der Zusatzelektrode 4 und der zweiten Leiterbahn 75 auf der flexiblen Leiterplatte 7 wird direkt über das zweite Kontaktierungsplättchen hergestellt, welches auf dem Endbereich der Zusatzelektrode 4 aufliegt. Durch das Einrasten der Rastnasen 68 ist eine Kontrollmöglichkeit dafür gegeben, dass das zweite Kontaktplättchen 66 auf der Zusatzelektrode 4 aufliegt. Ist die zweite Mutter 9 fest angezogen, ist eine permanente sichere Kontaktierung gewährleistet.

Durch die Zweistufigkeit der beiden Muttern 8, 9 ist der Aufbau weiterhin gegenüber Aufdrehen der Muttern 8, 9, beispielsweise beim Auftreten starker Erschütterungen oder Vibrationen im Prozess, geschützt.

Die flexible Leiterplatte 7 wird aus dem Sondengehäuse 2 herausgeführt, sodass eine Elektronikeinheit auf sie zugreifen kann. Hierzu ist auf den freien, d.h. nicht auf die Isolierhülse 62 aufgesteckten, Endbereich der Leiterplatte 7 ein Stecker 10 aufgebracht, welcher mit einem entsprechenden Gegenstück der Elektronikeinheit verbindbar ist. Der Stecker 10 weist vorzugsweise Buchsen zum Kontaktieren der Leiterbahnen 72, 75 auf, kann jedoch auch Kontaktstifte aufweisen. Zur Fixierung des Steckers 10 an einer vorgesehenen Position ist ein Haltesockel 11 mit dem Stecker 10 verbunden. Beispielsweise ist der Haltesockel 11 in eine Nut in dem Sondengehäuse 2 einklemmbar.

Fig. 2 offenbart eine Explosionsdarstellung einer vorteilhaften Ausgestaltung eines Kontaktierungsmoduls 6. Den Kern des Kontaktierungsmoduls 6 bildet die Isolierhülse 62. Diese besteht aus einem im Wesentlichen zylindrischen Grundkörper 64 und einem Auflageelement 63, welches scheibenförmig ist und orthogonal zu einer Oberfläche des Grundkörpers 64 ausgerichtet ist. Der zylindrische Grundkörper 64 ist hohl, sodass er auf den stabförmigen Abschnitt der Sondenelektrode 3 aufschiebbar ist. Das Auflageelement 63 unterteilt den Grundkörper 64 in zwei Abschnitte. Derjenige Abschnitt, mit welchem voran die Isolierhülse 62 auf die Zusatzelektrode 4 aufgebracht wird, ist hierbei länger als der andere Abschnitt. Hierdurch ist nach dem Einsetzen des Kontaktierungsmoduls 6 die Zentrierung der Sondenelektrode 3 in der Zusatzelektrode 4 gewährleistet.

Vorzugsweise handelt es sich bei der Isolierhülse 62 um ein Spritzguss- oder Drehteil aus Kunststoff. Das Auflageelement 63 dient der Auflage der beiden Kontaktbereiche 71, 74 der flexiblen Leiterplatte 7, welche vorzugsweise ebenfalls scheibenförmig sind. Die Leiterplatte 7 wird hierbei derart auf die Isolierhülse aufgesteckt, dass sich die zu kontaktierenden Leiterbahnen 72, 75 jeweils auf derjenigen Seite befindet, welche von dem Auflageelement 63 abgewandt ist. Das sich zwischen den beiden Kontaktbereichen 71, 74 befindende isolierende Auflageelement 63 gewährleistet hierbei weiterhin, dass keine Kurzschlüsse zwischen den beiden Kontaktbereichen 71, 74 auftreten können.

Auf die Leiterplatte 7 folgend ist jeweils ein Kontaktplättchen 65, 66 auf den Grundkörper 64 der Isolierhülse 62 aufbringbar. In dieser Ausgestaltung befindet sich der erste Kontaktbereich 71 auf der kurzen Seite des Grundkörpers 64 und der zweite Kontaktbereich 74 auf der langen Seite. Das erste Kontaktplättchen 65 ist auf den ersten Abschnitt des zylindrischen Grundkörpers 64 aufbringbar und liegt zumindest teilweise auf dem ersten Kontaktbereich 71 auf. Das zweite Kontaktplättchen, welches auf den zweiten Abschnitt des Grundkörpers 64 aufbringbar ist, ist vorteilhafterweise identisch zu dem ersten Kontaktplättchen 65 ausgestaltet. Die Kontaktplättchen 65, 66 sind aus einem elektrisch leitfähigen Material gefertigt, beispielsweise aus Messing, Kupfer, oder Edelstahl. Die Formgebung der Kontaktplättchen 65, 66 ist an die der Kontaktbereiche 71, 74 der Leiterplatte 7 und der Isolierhülse 62 angepasst, sodass die Kontaktplättchen 65, 66 in dieser Ausgestaltung ebenfalls scheibenförmig mit einer zentralen Ausnehmung sind. Vorzugsweise besitzen die Kontaktplättchen 65, 66 in einem ringförmigen Bereich um die zentrale Ausnehmung herum eine größere Dicke als im Randbereich. Der dickere Bereich steht dann in Kontakt mit der jeweils zu kontaktierenden Leiterbahn 72, 75, welche im Kontaktbereich 71, 74 ebenfalls ringförmig ist. Da die zweite Leiterbahn 75 im ersten Kontaktbereich 71 um die erste Leiterbahn 72 herum geführt wird, ist durch die unterschiedlichen Dicken des ersten Kontaktplättchens 65 gewährleistet, dass es nur die erste Leiterbahn 72 kontaktiert. Vorzugsweise sind die Kontaktplättchen 65, 66 symmetrisch, d.h. beide Seitenflächen weisen die Erhebung um das Zentrum der Scheibe herum auf.

Das Verdrehschutzelement 67 ist scheibenförmig und weist zwei Rastmittel in Form von Rastnasen auf. Der scheibenförmige Teil ist in das Modulgehäuse 61 einsteckbar. Die Rastnasen sind derart ausgestaltet, dass sie zumindest so weit aus dem Modulgehäuse 61 herausragen und an dessen Wandung anliegen oder diese umschließen, dass das Verdrehschutzelement 67 nicht im Modulgehäuse 61 drehbar ist. Vorteilhaft ist das Verdrehschutzelement 67 aus einem elektrisch leitfähigen Material gefertigt. Das Verdrehschutzelement 67 ist nicht auf die Isolierhülse 62 aufgesteckt, sondern weist eine zentrale Ausnehmung auf, deren Durchmesser an den Durchmesser der Sondenelektrode 3 angepasst ist. Beim Aufstecken des Kontaktierungsmoduls 6 auf die Sondenelektrode 3 berührt das Verdrehschutzelement 67 dann direkt die Sondenelektrode 3 und nicht die Isolierhülse 62, sodass über das Verdrehschutzelement 67 und das erste Kontaktplättchen 65 ein elektrisch leitfähiger Kontakt zwischen Sondenelektrode 3 und erster Leiterbahn 72 hergestellt ist. Die Dicke des Verdrehschutzelements 67 ist bevorzugt gleichmäßig.

Das Modulgehäuse 61 ist aus einem isolierenden Material gefertigt, wobei dieses so gewählt ist, dass die Isolierhülse 62 mit den Kontaktplättchen 65, 66, sowie das Verdrehschutzelement 67 in das schalenartige Modulgehäuse 61 einschnappbar sind. Der Aufbau aus Auflageelement 63, umgefalteter Leiterplatte 7 und Kontaktplättchen 65, 66 wird von dem Modulgehäuse 61 zusammengehalten. Für den Abschnitt der Leiterplatte 7, welcher den Verbindungsbereich zwischen dem ersten Kontaktbereich 71 und dem zweiten Kontaktbereich 74 darstellt, ist eine Aussparung in die Wandung des Modulgehäuses 61 eingebracht, sodass eine Stauchung dieses Abschnitts der Leiterplatte 7 durch das Modulgehäuse 61 vermieden wird. Weiterhin verfügt das Modulgehäuse 61 vorzugsweise zumindest an der Unterkante über zwei gegenüberliegend angeordnete Rastnasen 68. Das Kontaktierungsmodul 6 wird mit der Unterkante voran auf die Sondenelektrode 3 aufgesteckt. Die Rastnasen 68 dienen hierbei der Positionierung des Modulgehäuses 61, da sie in entsprechende Kavitäten in dem ersten Befestigungsmittel 8 eingreifen.

In einer vorteilhaften Ausgestaltung weist die Oberkante des Modulgehäuses 61 ebenfalls zwei Rastnasen 68 auf, sodass das Modulgehäuse 61 symmetrisch ist. Die Symmetrie von Modulgehäuse 61 und Kontaktplättchen 65, 66 erleichtert und beschleunigt die Montage des Kontaktierungsmoduls 6, da lediglich beim Aufbringen der Leiterplatte 7 auf die Isolierhülse 62 auf die Ausrichtung der zu montierenden Teile geachtet werden muss.

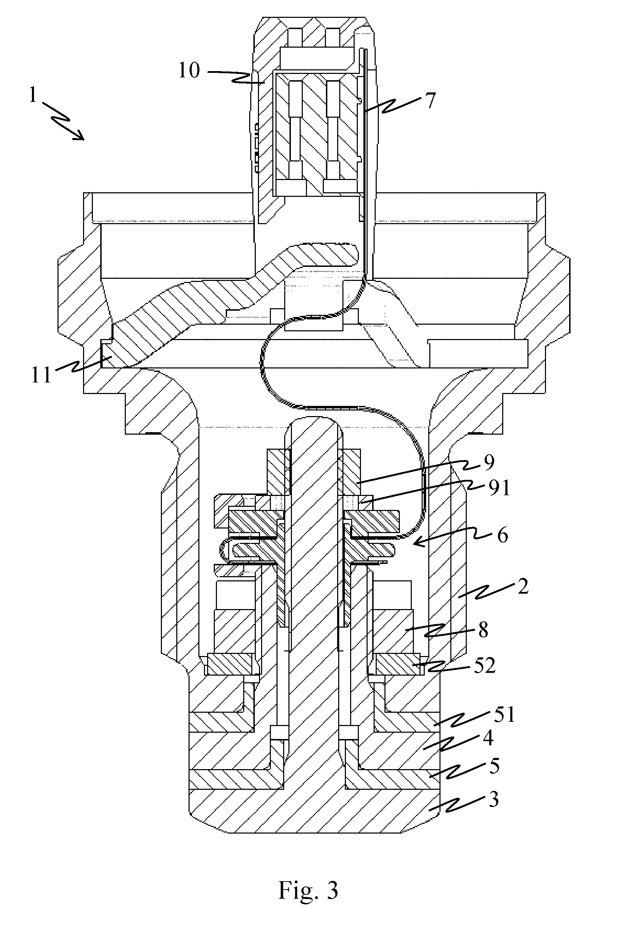

Fig. 3 zeigt schematisch eine Sondeneinheit 1 mit einer alternativen Ausführungsform des Kontaktierungsmoduls 6. Das zweite Kontaktplättchen 66 ist entfallen. Stattdessen kontaktiert die Zusatzelektrode 4 die zweite Leiterbahn 75 direkt. Auch das erste Kontaktplättchen 65 ist entfallen. Die Sondenelektrode 3 ist über die zweite Mutter 9 elektrisch leitend mit der ersten Leiterbahn 72 verbunden, wobei das Verdrehschutzelement 67 den leitfähigen Kontakt zwischen zweiter Mutter 9 und erster Leiterbahn 72 herstellt. Das Verdrehschutzelement 67 übernimmt somit eine Doppelfunktion als Kontaktierungshilfe und als Schutz der Leiterplatte 7 vor Verwindung. Um die Kontaktierung der ersten Leiterbahn 72 zu ermöglichen ist das Verdrehschutzelement 67 gegenüber demjenigen aus dem in Fig. 2 dargestellten Ausführungsbeispiel dahingehend verändert, dass es im Innenbereich und im Randbereich unterschiedliche Dicken aufweist. Der äußere Abschnitt des ersten Kontaktbereiches 71 wird von dem Verdrehschutzelement 67 auf Grund der im Randbereich des Verdrehschutzelementes 67 geringeren Dicke nicht berührt, sodass die dort verlaufende zweite Leiterbahn 75 nicht kontaktiert wird.

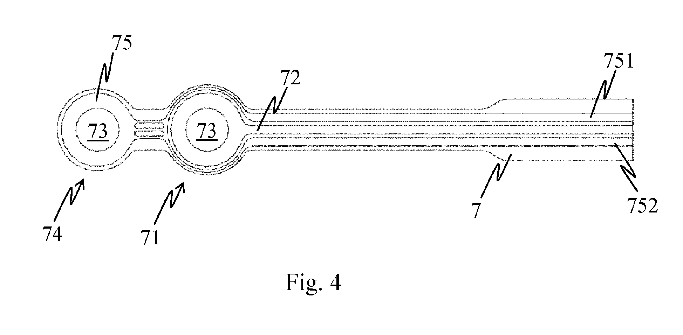

Fig. 4 zeigt eine flexible Leiterplatte 7 vor der Montage in dem Kontaktierungsmodul 6. Die Leiterplatte 7 ist im Wesentlichen streifenförmig und besitzt in einem Endbereich einen ersten Kontaktbereich 71 und einen zweiten Kontaktbereich 74, welcher mit dem ersten Kontaktbereich 71 verbunden ist. Der streifenförmige Abschnitt ist hier verkürzt dargestellt. Der zweite Kontaktbereich 74 ist mit dem ersten Kontaktbereich 71 durch Umklappen zumindest teilweise in Deckung bringbar, wobei dies auch den Fall beinhaltet, in welchem die Kontaktbereiche 71, 74 die gleiche Form aufweisen, aber unterschiedlich groß sind. Das in Deckung bringen bezieht sich somit im Wesentlichen auf die zentralen Ausnehmungen. In dieser Ausgestaltung sind die beiden Kontaktbereiche 71, 74 hintereinander angeordnet. Die Anordnung nebeneinander oder in einem anderen Winkel ist jedoch ebenfalls möglich. Passend zu dem scheibenförmigen Auflageelement 63 sind die Kontaktbereiche 71, 74 scheibenförmig. Die in die Kontaktbereiche 71, 74 mündenden Leiterbahnen 72, 75 sind entsprechend ringförmig. Die kreisförmige Ausnehmung in der Mitte der Kontaktbereiche 71, 74 ist so bemessen, dass die Leiterplatte 7 über die Ausnehmungen auf die Isolierhülse 62 aufbringbar ist.

In dieser vorteilhaften Ausgestaltung weist die Leiterplatte 7 drei Leiterbahnen 72, 751, 752 auf. Die erste Leiterbahn 72 verläuft zwischen den beiden anderen Leiterbahnen 751, 752 und mündet in den ersten Kontaktbereich 71, wo sie die kreisförmige Ausnehmung ringförmig umgibt. Die beiden äußeren Leiterbahnen 751, 752 können auch als zweite Leiterbahn 75 bezeichnet werden, da sie beide in eine ringförmige Struktur um die Ausnehmung im zweiten Kontaktbereich 74 münden und somit das gleiche Potential tragen. Durch die Ausführung der zweiten Leiterbahn 75 in Form von zwei größtenteils parallel verlaufenden Bahnen 751, 752 ist Redundanz geschaffen, sodass das vorgesehene elektrische Signal den zweiten Kontaktbereich 74 auch bei einer Beschädigung oder Fehlkontaktierung einer der beiden Bahnen 751, 752 erreicht. Die zweite Leiterbahn 75 wird über den Randbereich des ersten Kontaktbereichs 71 zu dem zweiten Kontaktbereich 74 geführt, weshalb die Fläche des ersten Kontaktbereichs 71 etwas größer als die des zweiten Kontaktbereichs 74 ist. Die Linienbreite der ersten Leiterbahn 72 und der zweiten Leiterbahn 75 ist in einander entsprechenden Abschnitten vorzugsweise im Wesentlichen gleich.

In dieser Ausgestaltung ist die innen liegende Leiterbahn mit erster Leiterbahn 72 bezeichnet. Somit dient der Kontaktbereich, in welchen die innen liegende Leiterbahn mündet, der Kontaktierung der Sondenelektrode 3. Entsprechend ist die Leiterplatte 7 wie in den Fig. 1-3 dargestellt auf die Isolierhülse 62 aufgebracht.

Die alternative Bezeichnung der innen liegenden Leiterbahn mit zweiter Leiterbahn 75 ist jedoch ebenfalls möglich, sodass der Kontaktbereich, in welchen die innen liegende Leiterbahn mündet, den zweiten Kontaktbereich 74 zur Kontaktierung der Zusatzelektrode 4 darstellt. In diesem Fall ist die Leiterplatte 7 entsprechend derart auf die Isolierhülse 62 aufgebracht, dass der Kontaktbereich, in welchen die innere Leiterbahn mündet, dem im montierten Zustand der Sondeneinheit 1 an der Zusatzelektrode 4 anliegenden, längeren Abschnitt des Grundkörpers 64 zugeordnet ist.

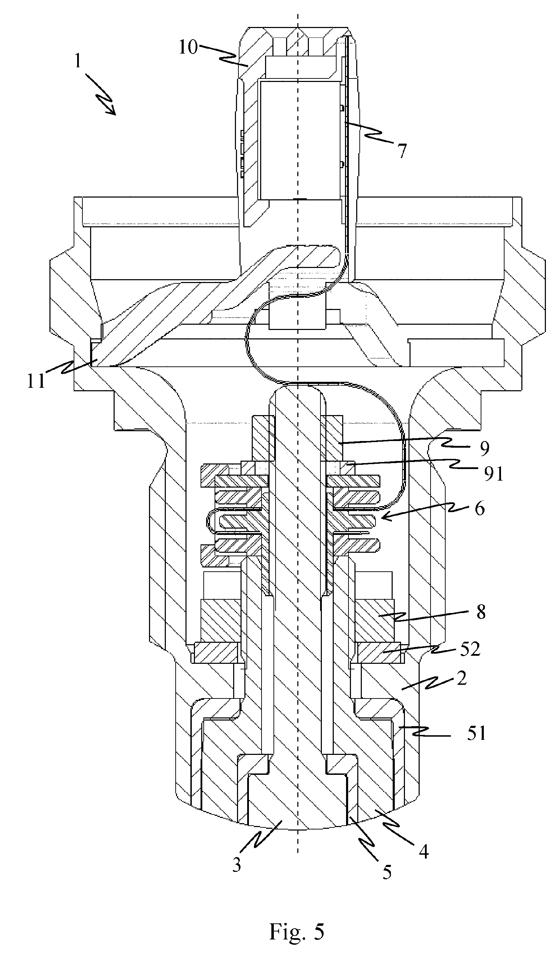

In Fig. 5 ist eine Sondeneinheit 1 schematisch dargestellt, welche sich von den in Fig. 1 und 3 dargestellten Sondeneinheiten 1 lediglich im unteren, d.h. unterhalb der Verjüngung des Sondengehäuses 2 liegenden Teilbereich unterscheidet. Die verschiedenen Ausgestaltungen des Kontaktierungsmoduls 6 können ebenso auf diese Ausführungsform angewandt werden.

Das Sondengehäuse 2 setzt sich nach der Verjüngung zylinderförmig fort, wobei die Mittelachse des so gebildeten Hohlzylinders mit der Längsachse der Sondeneinheit 1 übereinstimmt. Auch die Sondenelektrode 3, die Zusatzelektrode 4, die Isolierung 5 zwischen den beiden Elektroden 3, 4 und die Isoliereinheit 51 zwischen Zusatzelektrode 4 und Sondengehäuse 2, schließen jeweils mit einem zylindrischen Abschnitt ab. Die Elektroden 3, 4 und Isolierungen 5, 51 sind in radialer Richtung stets von dem zylindrischen Abschnitt des Sondengehäuses 2 umschlossen und schließen dicht gegeneinander und das Sondengehäuse 2 ab, wobei die dichte Verbindung über dem Fachmann bekannte Maßnahmen herstellbar ist. Die Elektroden 3, 4, Isolierungen 5, 51 und das Sondengehäuse 2 enden zudem ohne Versatz auf einer gemeinsamen Oberfläche. Eine derartige Sondeneinheit 1 ist im Wesentlichen frontbündig in einen Behälter einbaubar. Dies ist insbesondere bei Anwendungen von Vorteil, welche hohe hygienische Standards erfüllen müssen, da durch den frontbündigen Einbau weniger Angriffspunkte für Bakterien vorhanden sind.

### Bezugszeichenliste

- 1: Sondeneinheit
- 2: Sondengehäuse
- 3: Sondenelektrode
- 4: Zusatzelektrode
- 5: Isolierung
- 51, 52: Isolierungseinheit
- 6: Kontaktierungsmodul
- 61: Modulgehäuse
- 62: Isolierhülse
- 63: Auflageelement
- 64: Grundkörper
- 65: Erstes Kontaktplättchen
- 66: Zweites Kontaktplättchen
- 67: Verdrehschutzelement
- 68: Rastnase
- 7: Leiterplatte
- 71: Erster Kontaktbereich
- 72: Erste Leiterbahn
- 73: Ausnehmung
- 74: Zweiter Kontaktbereich
- 75: Zweite Leiterbahn
- 751: Äußere Leiterbahn
- 752: Äußere Leiterbahn
- 8: Erste Mutter
- 9: Zweite Mutter
- 91: Zahnscheibe
- 10: Stecker
- 11: Haltesockel

## Patentansprüche

1. Sondeneinheit (1) mit
- einem Sondengehäuse (2),
- einer zumindest abschnittsweise stabförmigen Sondenelektrode (3),
- einer Zusatzelektrode (4), welche die Sondenelektrode (3) zumindest abschnittsweise koaxial umgibt und durch eine elektrische Isolierung (5) von der Sondenelektrode (3) getrennt ist,
- einem ersten Befestigungsmittel (8), mittels welchem die Zusatzelektrode (4) in dem Sondengehäuse (2) befestigt ist,
- einem Kontaktierungsmodul (6), welches auf einen in dem Sondengehäuse (2) angeordneten stabförmigen Abschnitt der Sondenelektrode (3) aufbringbar ist, und welches eine Leiterplatte (7) mit mindestens einer ersten Leiterbahn (72) zur elektrischen Kontaktierung der Sondenelektrode (3) und mindestens einer zweiten Leiterbahn (75) zur elektrischen Kontaktierung der Zusatzelektrode (4) aufweist,
- und mit einem zweiten Befestigungsmittel (9) zur Befestigung des Kontaktierungsmoduls (6) an der Sondenelektrode (3),
**dadurch gekennzeichnet,**
**dass** die Leiterplatte (7) flexibel ist, und
**dass** das Kontaktierungsmodul (6) außer der Leiterplatte (7) eine Isolierhülse (62) und ein Modulgehäuse (61) aufweist,
wobei
- die Isolierhülse (62) einen im Wesentlichen zylindrischen Grundkörper (64) zur Aufnahme eines Abschnitts der stabförmigen Sondenelektrode (3) und ein im Wesentlichen orthogonal zu dem Grundkörper (64) ausgerichtetes flächiges Auflageelement (63), welches den Grundkörper (64) in einen ersten Abschnitt und einen zweiten Abschnitt unterteilt, aufweist,
- die Leiterplatte (7) in einem Endbereich über einen ersten Kontaktbereich (71), in welchen die erste Leiterbahn (72) mündet, und einen zweiten Kontaktbereich (74), in welchen die zweite Leiterbahn (75) mündet, verfügt, wobei der erste Kontaktbereich (71) und der zweite Kontaktbereich (74) jeweils eine zentrale Ausnehmung (73) aufweisen, deren Durchmesser mindestens gleich dem Außendurchmesser des Grundkörpers (64) der Isolierhülse (62) ist, und wobei zumindest die zentralen Ausnehmungen (73) des ersten Kontaktbereiches (71) und des zweiten Kontaktbereiches (74) durch Umfalten der Leiterplatte (7) in Deckung bringbar sind, sodass der erste Kontaktbereich (71) auf den ersten Abschnitt des Grundkörpers (64) und der zweite Kontaktbereich (74) auf den zweiten Abschnitt des Grundkörpers (64) aufbringbar ist,
- und das Modulgehäuse (61) den Aufbau aus Auflageelement (63) und Kontaktbereichen (71, 74) der Leiterplatte (7) zusammenhält.

2. Sondeneinheit nach Anspruch 1,
**dadurch gekennzeichnet,**
**dass** das Kontaktierungsmodul (6) ein erstes Kontaktplättchen (65) aufweist, welches derart ausgestaltet ist, dass es auf den ersten Abschnitt des Grundkörpers (64) der Isolierhülse (62) aufbringbar ist und die erste Leiterbahn (72) in dem ersten Kontaktbereich (71) elektrisch kontaktiert.

3. Sondeneinheit nach einem der vorangehenden Ansprüche,
**dadurch gekennzeichnet,**
**dass** das Kontaktierungsmodul (6) ein zweites Kontaktplättchen (66) aufweist, welches derart ausgestaltet ist, dass es auf den zweiten Abschnitt des Grundkörpers (64) der Isolierhülse (62) aufbringbar ist und die zweite Leiterbahn (75) in dem zweiten Kontaktbereich (74) elektrisch kontaktiert.

4. Sondeneinheit nach einem der vorangehenden Ansprüche,
**dadurch gekennzeichnet,**
**dass** das Kontaktierungsmodul (6) über ein Verdrehschutzelement (67) verfügt, welches in das Modulgehäuse (61) einbringbar ist und eine Verwindung der Leiterplatte (7) bei der Befestigung des zweiten Befestigungsmittels (9) verhindert.

5. Sondeneinheit nach einem der vorangehenden Ansprüche,
**dadurch gekennzeichnet,**
**dass** das Modulgehäuse (61) derart ausgestaltet ist, dass die von dem Modulgehäuse (61) aufzunehmenden Elemente (63, 65, 66, 67) des Kontaktierungsmoduls (6) in das Modulgehäuse (61) einpressbar oder einschnappbar sind.

6. Sondeneinheit nach einem der vorangehenden Ansprüche,
**dadurch gekennzeichnet,**
**dass** die Sondenelektrode (3) in einem in das Sondengehäuse (2) hineinragenden Endbereich frei von der Zusatzelektrode (4) ist,
und **dass** das Kontaktierungsmodul (6) derart auf die Sondenelektrode (3) aufgebracht ist, dass die zweite Leiterbahn (75) oder das zweite Kontaktplättchen (66) zumindest teilweise auf der Zusatzelektrode (4) aufliegt.

7. Sondeneinheit nach einem der vorangehenden Ansprüche,
**dadurch gekennzeichnet,**
**dass** es sich bei dem ersten Befestigungsmittel (8) um eine Mutter handelt, welche auf die Zusatzelektrode (4) aufgebracht ist
und/oder
**dass** es sich bei dem zweiten Befestigungsmittel (9) um eine Mutter handelt, welche auf die Sondenelektrode (3) aufgebracht ist.

8. Sondeneinheit nach einem der vorangehenden Ansprüche,
**dadurch gekennzeichnet,**
**dass** zwischen dem Kontaktierungsmodul (6) und dem zweiten Befestigungsmittel (9) ein federndes Element oder eine mitverspannte federnde Schraubensicherung (91) angeordnet ist.

9. Sondeneinheit nach einem der vorangehenden Ansprüche,
**dadurch gekennzeichnet,**
**dass** das erste Befestigungsmittel (8) mindestens eine Kavität aufweist, und dass das Kontaktierungsmodul (6) über mindestens ein Rastmittel (68) verfügt, welches in die Kavität einbringbar ist.

## Claims

1. Probe unit (1) with
- a probe housing (2),
- a probe electrode (3) which is at least partially rod-like in shape
- an additional electrode (4), which coaxially surrounds the probe electrode (3) at least in part and which is isolated from the probe electrode (3) by means of electrical isolation (5),
- a first fastening unit (9) with which the additional electrode (4) is fastened in the probe housing (2),
- a connection module (6), which can be fitted on a rod-like section of the probe electrode (3) arranged in the probe housing (2), and which has a printed circuit board (7) with at least a first conductive track (72) for the electrical connection of the probe electrode (3) and at least a second conductive track (75) for the electrical connection of the additional electrode (4),
- and with a second fastening unit (8) designed for fastening the connection module (6) to the probe electrode (3),
**characterized in that**
the printed circuit board (7) is flexible, and
**in that** the connection module (6) has an insulation sleeve (62) and a module housing (61) in addition to the printed circuit board (7),
wherein
- the insulation sleeve (62) has an essentially cylindrical meter body (64) for accommodating a section of the rod-like probe electrode (3) and a planar support element (63) which is aligned in an essentially orthogonal manner in relation to the meter body (64), said element dividing the meter body (64) into a first section and a second section,
- in an end section the printed circuit board (7) has a first contact area (71) into which the first conductive track (72) leads, and a second contact area (74) into which the second conductive track (75) leads, wherein the first contact area (71) and the second contact area (74) each has a central opening (73) the diameter of which is at least the same as the outer diameter of the meter body (64) of the insulation sleeve (62), and wherein at least the central openings (73) of the first contact area (71) and the second contact area (74) can be aligned by folding the printed circuit board (7) such that the first contact area (71) can be placed on the first section of the meter body (64) and the second contact area (74) can be placed on the second section of the meter body (64),
- and the module housing (61) holds together the assembly comprising the support element (63) and the contact areas (71, 74) of the printed circuit board (7).

2. Probe unit as claimed in Claim 1,
**characterized in that**
the connection module (6) has a first contact plate (65) which is designed in such a way that it can be fitted on the first section of the meter body (64) of the insulation sleeve (62) and establishes an electrical connection with the first conductive track (72) in the first contact area (71).

3. Probe unit as claimed in one of the previous claims,
**characterized in that**
the connection module (6) has a second contact plate (66) which is designed in such a way that it can be fitted on the second section of the meter body (64) of the insulation sleeve (62) and establishes an electrical connection with the second conductive track (75) in the second contact area (74).

4. Probe unit as claimed in one of the previous claims,
**characterized in that**
the connection module (6) has an anti-rotation element (67), which can be introduced into the module housing (61) and which prevents the twisting of the printed circuit board (7) when the second fastening unit (9) is secured.

5. Probe unit as claimed in one of the previous claims,
**characterized in that**
the module housing (61) is designed in such a way that the elements (63, 65, 66, 67) of the connection module (6) to be accommodated by the module housing (61) can be clicked into or pressed into the module housing (61).

6. Probe unit as claimed in one of the previous claims,
**characterized in that**
the probe electrode (3) is free from the additional electrode (4) in an end area projecting into the probe housing (2), and **in that** the connection module (6) is put on the probe electrode (3) in such a way that the second conductive track (75) or the second contact plate (66) rests at least partially on the additional electrode (4).

7. Probe unit as claimed in one of the previous claims,
**characterized in that**
the first fastening unit (8) is a nut which is fitted onto the additional electrode (4) and/or
**in that** the second fastening unit (9) is a nut that is fitted onto the probe electrode (3).

8. Probe unit as claimed in one of the previous claims,
**characterized in that**
a spring element or a tensioned spring screw lock (91) is arranged between the connection module (6) and the second fastening unit (9).

9. Probe unit as claimed in one of the previous claims,
**characterized in that**
the first fastening unit (8) has at least one cavity, and **in that** the connection module (6) has at least one latching unit (68) which can be introduced into the cavity.

## Revendications

1. Unité de sonde (1) avec
- un boîtier de sonde (2),
- une électrode de sonde (3) au moins partiellement en forme de tige
- une électrode auxiliaire (4), qui entoure de façon coaxiale, au moins partiellement, l'électrode de sonde (3) et qui est séparée de l'électrode de sonde (3) par une isolation électrique (5),
- un premier moyen de fixation (9), à l'aide duquel l'électrode auxiliaire (4) est fixée dans le boîtier de sonde (2),
- un module de connexion (6), qui peut être installé sur une partie en forme de tige de l'électrode de sonde (3) disposée dans le boîtier de sonde (2), et qui comporte un circuit imprimé (7) avec au moins une première piste conductrice (72) pour la connexion électrique de l'électrode de sonde (3) et au moins une deuxième piste conductrice (75) pour la connexion électrique de l'électrode auxiliaire (4),
- et avec un deuxième moyen de fixation (9) destiné à la fixation du module de connexion (6) sur l'électrode de sonde (3),
**caractérisée**
**en ce que** le circuit imprimé (7) est souple, et
**en ce que** le module de connexion (6) comporte en plus du circuit imprimé (7) une douille isolante (62) et un boîtier de module (61),
pour laquelle
- la douille isolante (62) comporte un corps de base (64) essentiellement cylindrique, faisant office de support pour une partie de l'électrode de sonde (3) en forme de tige, et un élément d'appui (63) plat aligné pour l'essentiel dans une direction orthogonale au corps de base (64), lequel élément divise le corps de base (64) en une première partie et en une deuxième partie,
- le circuit imprimé (7) dispose dans une zone d'extrémité d'une première zone de contact (71), dans laquelle aboutit la première piste conductrice (72), la première zone de contact (71) et la deuxième zone de contact (74) présentant chacune une cavité (73) centrale, dont le diamètre est au moins égal au diamètre extérieur du corps de base (64) de la douille isolante (62), et au moins les cavités (73) centrales de la première zone de contact (71) et de la deuxième zone de contact (74) pouvant être amenées, par pliage du circuit imprimé (7), dans une position telle que la première zone de contact (71) puisse être placée sur la première partie du corps de base (64) et la deuxième zone de contact (74) sur la deuxième partie du corps de base (64),
- le boîtier de module (61) maintient assemblé l'ensemble constitué de l'élément d'appui (63) et des zones de contact (71, 74) du circuit imprimé (7).

2. Unité de sonde selon la revendication 1,
**caractérisée**
**en ce que** le module de connexion (6) comporte une première plaquette de contact (65), qui est conçue de telle sorte à pouvoir être installée sur la première partie du corps de base (64) de la douille isolante (62) et à établir un contact électrique avec la première piste conductrice (72) dans la première zone de contact (71).

3. Unité de sonde selon l'une des revendications précédentes,
**caractérisée**
**en ce que** le module de connexion (6) comporte une deuxième plaquette de contact (66), qui est conçue de telle sorte à pouvoir être installée sur la première partie du corps de base (64) de la douille isolante (62) et à établir un contact électrique avec la deuxième piste conductrice (75) dans la deuxième zone de contact (74).

4. Unité de sonde selon l'une des revendications précédentes,
**caractérisée**
**en ce que** le module de connexion (6) dispose d'un élément de protection antitorsion (67), qui peut être introduit dans le boîtier de module (61) et qui empêche une déformation du circuit imprimé (7) lors de la fixation du deuxième moyen de fixation (9).

5. Unité de sonde selon l'une des revendications précédentes,
**caractérisée**
**en ce que** le boîtier de module (61) est conçu de telle sorte à ce que les éléments (63, 65, 66, 67) du module de connexion (6), devant être logés dans le boîtier de module (61), peuvent être engagés par pression ou encliquetés.

6. Unité de sonde selon l'une des revendications précédentes,
**caractérisée**
**en ce que** l'électrode de sonde (3) déborde l'électrode auxiliaire (4) dans une zone d'extrémité s'étendant dans le boîtier de sonde (2), et en ce que le module de connexion (6) est placé sur l'électrode de sonde (3) de telle sorte que la deuxième piste conductrice (75) ou la deuxième plaquette de contact (66) repose au moins partiellement sur l'électrode auxiliaire (4).

7. Unité de sonde selon l'une des revendications précédentes,
**caractérisée**
**en ce que**, concernant le premier moyen de fixation (8), il s'agit d'un écrou qui est installé sur l'électrode auxiliaire (4)
et/ou
**en ce que**, concernant le deuxième moyen de fixation (9), il s'agit écrou qui est installé sur l'électrode de sonde (3).

8. Unité de sonde selon l'une des revendications précédentes,
**caractérisée**
**en ce qu'**entre le module de connexion (6) et le deuxième moyen de fixation (9) est disposé un élément élastique ou un disque d'arrêt élastique (91).

9. Unité de sonde selon l'une des revendications précédentes,
**caractérisée**
**en ce que** le premier moyen de fixation (8) présente au moins une cavité, et en ce que le module de connexion (6) dispose d'au moins un moyen d'encliquetage (68), qui peut être introduit dans la cavité.
